Europäisches Patentamt

European Patent Office

Office européen des brevets

(11) Veröffentlichungsnummer: **0 337 089**
**A1**

(12) EUROPÄISCHE PATENTANMELDUNG

(21) Anmeldenummer: 89103236.9

(22) Anmeldetag: 24.02.89

(51) Int. Cl.⁴: **A01F  25/20**

(30) Priorität: 09.04.88 DE 3811924

(43) Veröffentlichungstag der Anmeldung:
18.10.89 Patentblatt  89/42

(84) Benannte Vertragsstaaten:
AT BE CH DE ES FR GB IT LI NL SE

(71) Anmelder: **von der Heide, Hans**
**Ibbenbürener Strasse 17**
**D-4533 Laggenbeck(DE)**

(72) Erfinder: **von der Heide, Hans**
**Ibbenbürener Strasse 17**
**D-4533 Laggenbeck(DE)**

(74) Vertreter: **Patentanwälte Schulze Horn und**
**Hoffmeister**
**Goldstrasse 36**
**D-4400 Münster(DE)**

(54) **Silagegutschneidegerät mit U-förmigem Tragerahmen.**

(57) Die Erfindung betrifft ein Silagegutschneidegerät
mit einem an einem Montagegetell anbringbaren und
an diesem vertikal auf- und abbewegbaren U-förmigen Tragrahmen, an dessen starren Tragrahmenschenkeln beidseitig, von Antriebsorganen gegenläufig bewegbare, als messerförmige, starre Schneidleisten ausgebildete Schneidwerkzeuge gehaltert sind.

Das neue Gerät kennzeichnet sich dadruch, daß
zur Übertragung der Antriebskraft von zwei endseitig
am Tragrahmenende angebrachten Antriebsorganen
zwei um jeweils feststehende Gelenkbolzen in
Schneidebewegungsrichtung vor- und zurückbewegliche Hebel vorgesehen sind, über die übereinanderliegend und einander übergreifend ausgestalteten
Endarme (12) der an einem starren Mittelstück (7)
gehalterten Schneideleisten (6, 8) der Seitenschneidwerkzeuge auf diese übertragen wird, die jeweils an
ihrem anderen Ende auf ihren Endarmen (12) in die
ihnen zugeordnete Ebene von Eckverbindungselementten (11) eingreifend, über die in diesen befindlichen Krafübertragungsmittel (13) die Kraft auf die
jeweiligen Endarme (12) der vorderen Scheidleisten
(6, 8) übertragen. Bevorzugt ist dabei vorgesehen,
daß die Übertragungsmittel (13) aus in einem Führungsgehause aufrecht stehenden, mittels einseitig
eingefräster bogenförmiger Nuten ineinandergreifenden, Schubkräfte übertragenden Metallzylinderrollen
bestehen.

Fig.1

## Silagegutschneidegerät mit U-förmigem Tragerahmen

Die Erfindung betrifft ein Silagegutschneidegerät mit einem an einem Montagegestell anbringbaren und an diesem vertikal auf- und abbewegbaren U-förmigen Tragrahmen, an dessen starren Tragrahmenschenkeln beidseitig, von Antriebsorganen gegenläufig bewegbare, als messerförmige, starre Schneidleisten ausgebildete Schneidwerkzeuge gehaltert sind.

Silagegutschneidegeräte dienen dem blockförmigen Ausschneiden von Silagegut insbesondere aus Flachsilos. Silagegutschneidegeräte werden zumeist als Anbaugeräte für Ackerschlepper oder andere ähnliche Fahrzeuge eingesetzt und müssen dabei einerseits gewährleisten, daß möglichst hohe Schneidleistung von dem oder den Antriebsorganen auf die Schneidleisten gebracht wird. Zum anderen soll der Silagegutschneider wegen des vorgegebenen zulässigen Gesamtgewichts des Schleppfahrzeuges von möglichst geringem Eigengewicht sein, um eine möglichst hohe Nutzlast an Silagegut zu ermöglichen.

Herkömmlicherweise sind Silagegutschneidegeräte so ausgebildet, daß zur Erzeugung eines exakten Schnitts im Silagegut die Schneidwerkzeuge an den seitlichen Tragrahmenschenkeln wie auch am Frontschneidewerk entweder als einfache Schneidleisten ausgebildet sind, die durch seitlich an der Stirnendseite der Seitenschenkel des Tragegestells angebrachte Arbeitszylinder durch sägeartiges Hin- und Herziehen der Schneidleisten den Silageblock herausschneiden, wobei die Schneidleisten des Frontschneidewerkes mit den Seitenschneidewerken über flexible Eckverbindungselemente verbunden sind.

Auch ist bekannt, die Schneidewerkzeuge als Doppelschneidewerkzeuge auszubilden, wobei eine Schneidleiste starr montiert und die andere hierzu gegenläufig hin- und hergezogen wird. Auch wird teilweise die Antriebskraft über ein einziges, auf dem Fronttragrahmenschenkel angebrachtes Arbeitsorgan erzeugt, wobei die vertikale Bewegung vom Arbeitszylinder über ein Verbindungselement sowie Hebelarme in horizontale Messerleistenbewegungen umgesetzt wird. Hierbei wird die Zugkraft über Winkelhebel und weitere Hebel von den Frontschneideleisten auf die Seitenschneideleisten übertragen.

Diese Ausgestaltung setzt eine konstruktiv aufwendige, störanfällige und gewichtserhöhende Konstruktion voraus. Nachteilig wirkt sich hierbei aus, daß Antriebsorgan sowie Druckmittelleitungen im Arbeitsbereich des Schneidegerätes angebracht werden müssen.

Aufgabe der Erfindung ist es, eine gewichtssparende, wartungsarme und möglichst effektive direkte Übertragung der Schubleistung der Antriebsorgane auf die Schneidleisten zu ermöglichen und auf die Umsetzung von vertikal wirkender Schubkraft in horizontal wirkende Zugkraft den den Messerleisten mittels aufwendiger Hebeltechnik verzichten zu können. Diese Aufgabe ist erfindungsmäßig dadurch gelöst, daß die Antriebskraft von zwei jeweils am Ende der gabelförmig ausgestalteten Befestigungsvorrichtungen der seitlichen Tragrahmenschenkel am Montagegestell angebrachten Arbeitszylinder als Schubkraft über zwei um festinstallierte Gelenkbolzen jeweils zur Schneiderichtung hin und her beweglichen Hebelarme auf die jeweils vertikal übereinander gelagerten Hebelarme der an einem starren Mittelstück gehalterten Seitenschneidwerkzeuge übertragen wird.

Das Übereinanderlegen der Endarme der Schneidwerkzeuge wird dadurch ermöglicht, daß die inneren Schneideleisten insgesamt höher als die äußeren Schneideleisten ausgebildet sind. Dadurch ist es möglich, die Endarme zur Mitte hin abgewinkelt übereinander verlaufen zu lassen.

Dadurch das der jeweils obere Endarm der Seitenschneideleisten mit dem oberen Arm der Antriebshebel verbunden ist, der untere, jeweils in Gegenrichtung zum oberen Arm des Antriebshebels befindlich, mit dem unteren Endarm der Seitenschneideleisten verbunden ist, wird eine gegenläufige Schneidleistenbewegung ermöglicht.

Die an ihren zum Frontschenkel des Tragrahmens hinweisenden Endarme der Seitenschneideleisten sind wiederum übereinander gelagert ausgestaltet und führen ihrerseits über zwei Eckverbindungselemente die Schubkraft auf die jeweilig zugeordneten Endarme des Frontschneidewerks über.

Dabei ist die Ausgestaltung der Eckverbindungselemente so konzipiert, daß in einem bogenförmig um die Ecke führenden Führungsteil in zwei Ebenen übereinander aufrecht angeordnete, zum besseren Ineinandergreifen einseitig bogenförmig ausgefräste Metallzylinderrollen die Schubkraft durch den jeweils in die obere bzw. untere Ebene des Eckverbindungselementes eindringenden Endarm der vorderen bzw. hintern Seitenschneideleiste auf den jeweils zugeordneten Endarm der Frontschneideleisten übertragen wird.

Dabei können zur Kraftübertragung im Führungsteil als Kraftübertragungsmittel auch eine ketten- oder stahlbandähnliche Ausgestaltung vorgesehen werden.

Auch ist eine Ausbildung der Führungsteile der Eckverbindungselemente als Hydraulikteile denkbar, wobei die Endarme der Schneidleisten dann kolbenförmig auszugestalten wären und Hydraulikflüssigkeit als Kraftmittler eingesetzt werden könnte.

Die mit der Erfindung erzielbaren Vorteile liegen insbesondere darin, daß die Antriebskraft der horizontal arbeitenden Arbeitszylinder als Schubkraft ohne Kraftverlust mittels Hebeln direkt auf die Schneidleisten übertragbar ist.

Das Ersetzten der aufwendigen Hebelkonstruktionen sowie insbesondere die Verwendung der erfindungsgemäßen, den Arbeitsdruck übertragenden Eckverbindungselemente anstelle flexibler oder winkelhebelförmiger Eckverbindungen ermöglicht das Vermeiden von Kraftverlust in den Übertragungsbereichen sowie störanfälligen Konstruktionsaufwand.

Durch Verminderung der Anzahl konstruktionsbedingter Teile kann das Gewicht des Silagegutschneidegeräts reduziert werden.

Die Gegenläufigkeit der Schneidleisten der einzelnen Schneidwerkzeuge sowie eine konstruktionsbedingt schmalere Ausführung der Schneidwerkzeuge tragen zu einer erhöhten Schneidkraft des Silagegutschneidegerätes bei.

Vorteilhaft beim Arbeitseinsatz wirkt sich das Anbringen der Arbeitszylinder außerhalb des eigentlichen Schneidebereichs des Silagegutschneidegerätes aus. Diese Anbringung ermöglicht ebenfalls ein Verlegen der Druckleitung außerhalb des Schneidbereichs.

Eine Ganzummantelung des Tragrahmens einschließlich aller beweglicher Teile, bis auf die unterseits herausragenden Messerschneiden, gewährleistet geringe Störanfälligkeit durch Verschmutzung.

Ein Ausführungsbeispiel ist in den Zeichnungen dargestellt und wird im folgenden näher beschrieben. Es zeigen:

Figur 1 eine perspektivische Ansicht des Silagegutschneidegerätes mit U-förmigem Montagegestell

Figur 2 einen Querschnitt durch einen Antriebshebel in Höhe des Gelenkbolzens (2) in Figur 1

Figur 3 eine Seitenansicht des in Figur 2 im Querschnitt dargestellten Antriebshebels

Figur 4 einen horizontalen Schnitt durch ein Eckverbindungselement und die zugehörigen Endarme eines Seiten- bzw. Frontschneidewerkzeuges

Figur 5 die Seitenansicht eines Eckverbindungselementes

Figur 6 die Darstellung eines Schneidewerkzeuges im Querschnitt im Bereich eines Führungsbolzens (Schnittebene A - A der Figur 7)

Figur 7 die Seitenansicht eines Schneidewerkzeuges im Bereich eines Führungsbolzens.

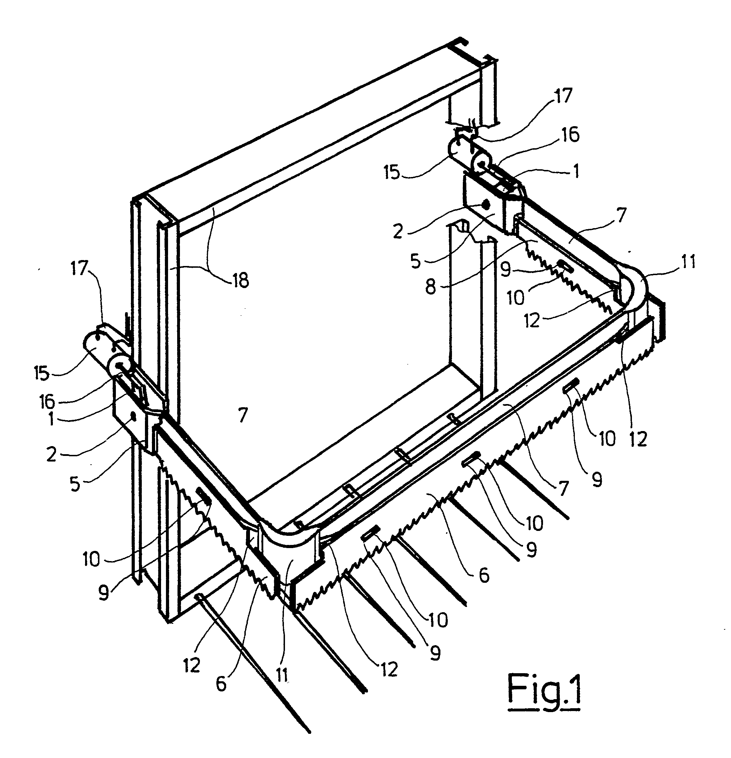

In der Figur 1 ist in perspektivischer Ansicht ein U-förmiger Tragrahmen dargestellt, der aus gabelförmigen Konstruktionsteilen 5, die mit feststehenden Mittelstegen 7 der Seiten- sowie des Frontschenkels des Tragrahmens fest verbunden sind, jeweils an den Mittelstegen durch Führungsbolzen 10 in Führungsnuten 9 gehalterten vorderen 6 und hinteren 8 messerartig ausgebildeten Schneidleisten besteht, die an deren Endarme 12 über Eckverbindungselemente 11 miteinander kraftschlüssig verbunden sind.

Die Schneidleisten 6 und 8 werden über ein jeweils am Ende der gabelförmigen Konstruktionsteile 5, die die Verbindung des Tragrahmens zum Montagegestell 18 herstellen, angebrachte, gegenläufig arbeitende Antriebszylinder 15 mittels Antriebskolben 16 über jeweils in den gabelförmigen Konstruktionsteilen 5 um Gelenkbolzen 2 vor- und zurückbewgbare Antriebshebel 1 in horizontal gegenläufige Bewegung versetzt.

Dabei sind die Antriebskolben 16 der Arbeitszylinder 15 jeweils über ein Verbindungsgelenk 3 mit den Antriebshebeln 1 gekoppelt.

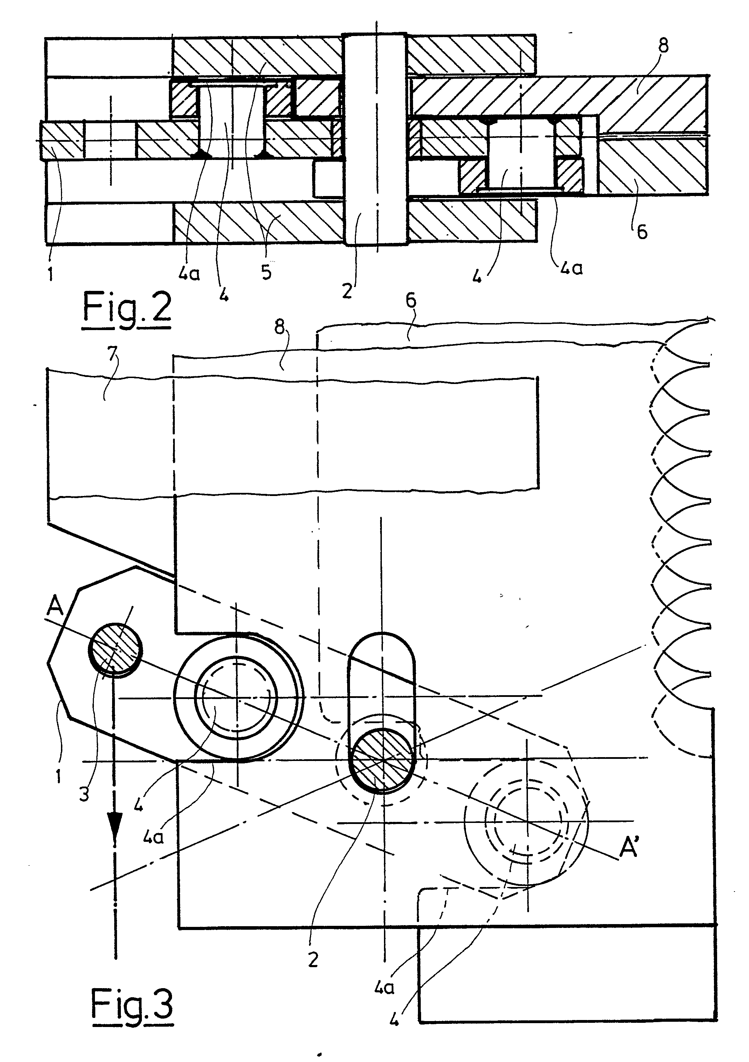

Figur 2 stellt im Querschnitt einen Antriebshebel 1 dar, der in jeweils gleichartiger Ausführung in den gabelförmig ausgebildeten Konstruktionsteilen 5, die die Verbindung zum MOntagegestell 18 herstellen, um einen an diesen festinstallierten Gelenkbolzen 2 beweglich ist. Der Antriebshebel ist mittels eines Verbindungsgelenks 3 mit dem entsprechenden Antriebskolben 16 (Figur 1) der jeweiligen Arbeitszylinder (Figur 1/15) verbunden. Durch auf Zapfen aufgesetzte, mit dem Antriebshebel 1 fest verschweißte Lagerbolzen 4 sind die vorderen 6 und hinteren 8 Schneidleisten der Seitenschneidwerkzeuge mit den Antriebshebeln 1 verbunden.

Figur 3 stellt in Seitenansicht die Arbeitsweise eines Antriebshebels 1 dar. Der Antriebshebel ist um ein starres Gelenk 2 beweglich. Er ist über ein Verbindungsgelenk 3 mit dem Antriebskolben des Arbeitszylinders verbunden. Die jeweils vordere 6 und hintere 8 Schneidleiste der Seitenschneidwerkzeuge sind durch die Gelenkbolzen 4, die mit ihrem jeweils überstehenden Teil in die Gelenkpfannen 4a der Schneidleisten eingreifen, beweglich verbunden.

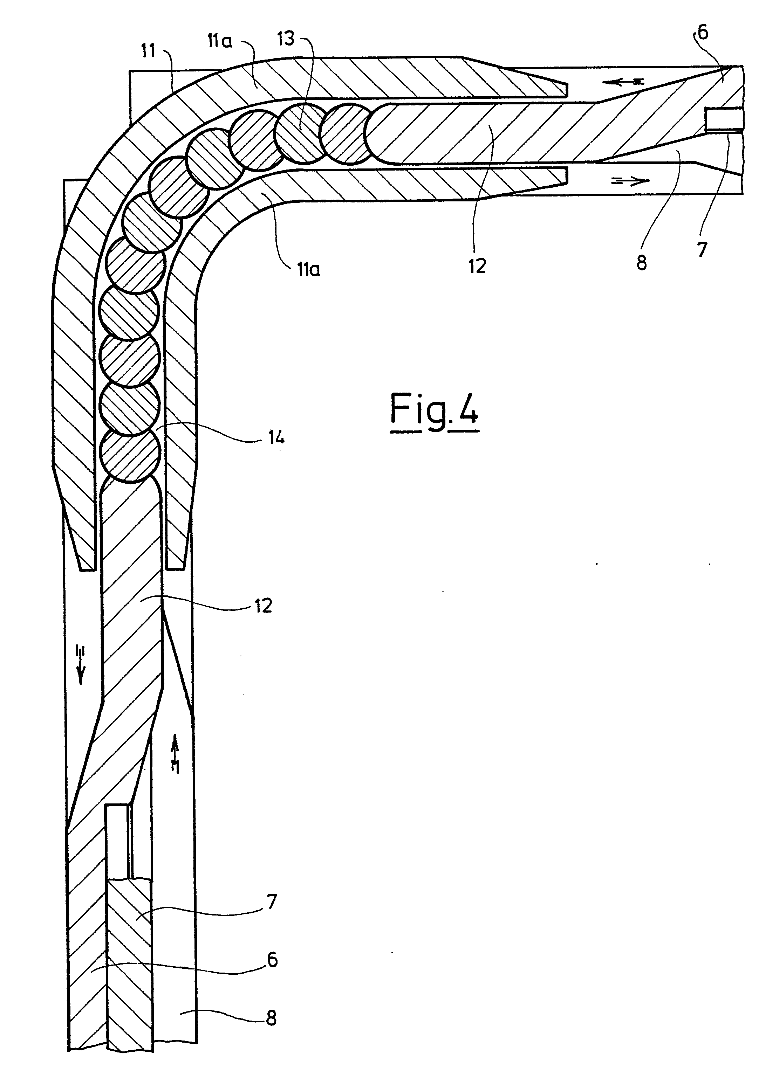

Figur 4 stellt in einem horizontalen Schnitt die Wirkungsweise eines Eckverbindungselementes dar. In die Führungsvorrichtung 11a des bogenförmig um die Ecke geführten Eckverbindungselementes 11 greifen die Schneidleistenarme 12 ein, die mittels aufrechtstehender, zum besseren Ineinandergreifen einseitig bogenförmig ausgefräster Metallzylinderrollen die Antriebskraft jeweils mittels wechselseitigen Schubes aufeinander übertragen.

Dabei ist ersichtlich, daß die Schneidleisten 6 und 8 an ihrem Ende so zur Mitte hin winkelförmig abgebogen sind, daß die Endarme jeweils in einer Ebene übereinander gelagert in den beiden Ebenen des Eckverbindungselementes eingreifen können.

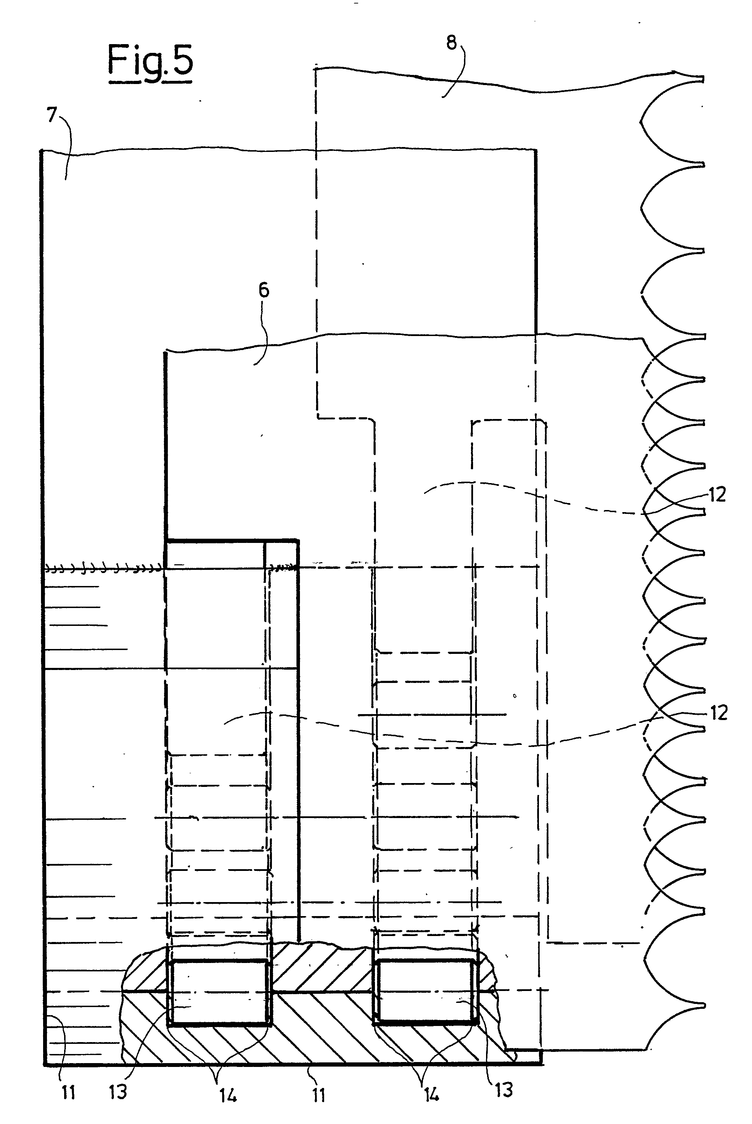

Figur 5 stellt die Wirkungsweise der Eckverbindungselemente 11 in Seitenansicht dar. Dabei greifen die ndarme 12 der vorderen 6 und hinteren 8 Schneidleisten in die übereinandergelagerten Führungsvorrichtungen 11a ein und leiten den Antriebsdruck über die ineinandergreifenden Metallzylinderrollen um die Ecke herum weiter.

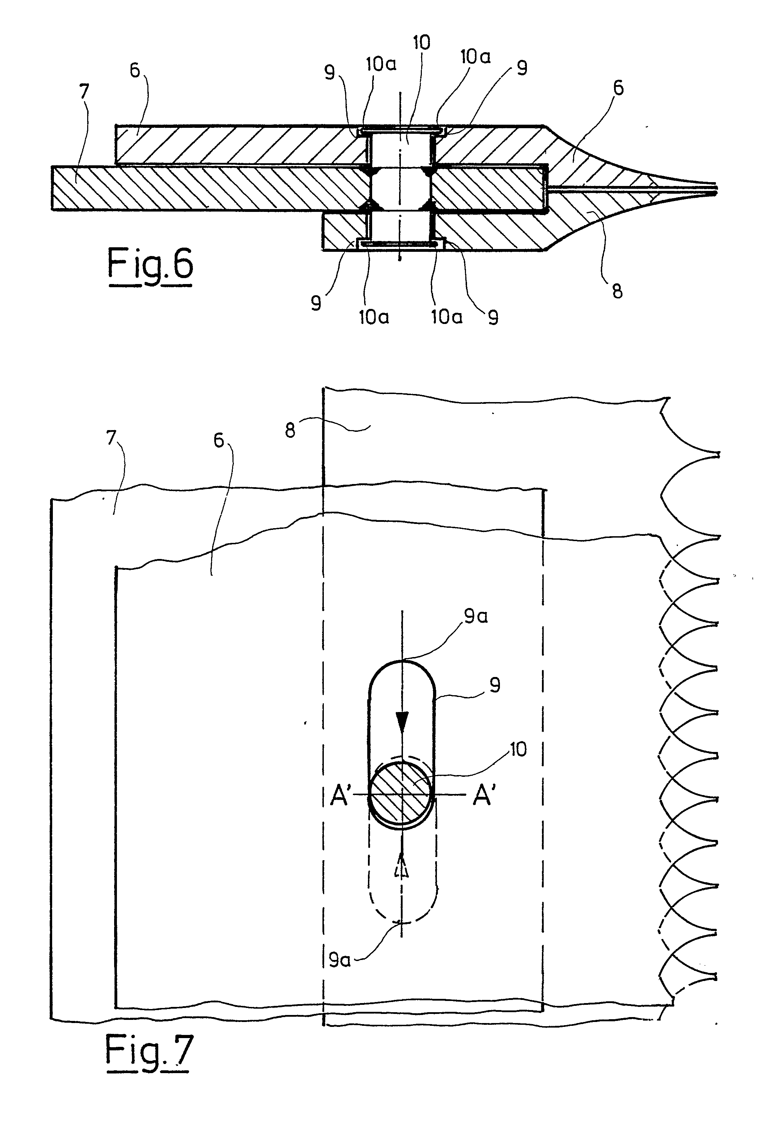

Figur 6 zeigt im Querschnitt den Aufbau eines Schneidwerkzeuges. Dabei ist im Bereich eines Führungsbolzens 9 die vordere Schneidleiste 6 und die hintere Schneidleiste 8 zueinander parallel mittels eines an dem feststehenden Mittelsteg 7 des Tragrahmens festverschweißten bolzens 10 gehaltert. Der Führungsbolzen 10 weist an seinen Enden jeweils einen überkragenden Kopf 10a auf, der paßgerecht in die an den Schneidleisten eingefrästen Führungsnuten 9 eingreifen und dadurch für eine genaue, flatterfreie Führung der Schneidleisten Sorge tragen.

Figur 7 zeigt in Seitenansicht ein Schneidwerkzeug, wobei die parallel zueinander stehende vordere Schneidleiste 6 sowie die hintere Schneidleiste 8 an den feststehenden Mittelsteg 7 mittels eines bolzens 10 jeweils in einer Führungsnut gehaltert werden.

Die Schneidleisten sind gegenüber diesem feststehenden bolzen bis zum jeweiligen äußeren Anschlag 9a der Führungsnut horizontal hin und her bewegbar.


**Ansprüche**

1. Silagegutschneidegerät mit einem an einem Montagegestell anbringbaren und an diesem vertikal auf- und abbewegbaren U-förmigen Tragrahmen, an dessen starren Tragrahmenschenkeln beidseitig, von Antriebsorgangen gegenläufig bewegbare, als messerförmige, starre Schneidleisten ausgebildete Schneidwerkzeuge gehaltert sind, dadurch gekennzeichnet, daß zur Übertragung der Antriebskraft von zwei endseitig am Tragrahmenende angebrachten Antriebsorganen zwei um jeweils feststehende Gelenkbolzen in Schneidebewegungsrichtung vor-und zurückbewegliche Hebel vorgesehen sind, über die übereinanderliegend und einander übergreifend ausgestalteten Endarme der an einem starren Mittelstück gehalterten Schneidleisten der Seitenschneidwerkzeuge auf diese übertragen wird, die jeweils an ihrem anderen Ende auf ihren Endarmen in die ihnen zugeordnete Ebene von Eckverbindungselementen eingreifend, über die in diesen befindlichen Kraftübertragungsmittel die Kraft auf die jeweiligen Endarme der vorderen Schneidleisten übertragen.

2. Silagegutschneidegerät nach Anspruch 1, dadurch gekennzeichnet, daß als Antriebsorgane zwei, jeweils am Ende der gabelförmigen Befestigungsvorrichtung der Seitenschenkel des Tragrahmens mit dem Montagegestell angebrachte, gegenläufig arbeitende Arbeitszylinder vorgesehen sind, die mittels ihres Druckkolbens den Antriebsdruck auf in der gabelförmigen Befestigungsvorrichtung um einen feststehenden Lagerbolzen in Schneidrichtung vor und zurück bewegliche Antriebshebel weitergeben.

3. Silagegutschneidegerät nach Anspruch 1 - 2, dadurch gekennzeichnet, daß die seitlichen wie auch der vordere Tragrahmenschenkel aus einem starren Mittelstück sowie an diesem befestigte vordere wie auch hintere horizontal gegenläufig bewegliche messerförmige Schneidleisten bestehen.

4. Silagegutschneidegerät nach Anspruch 1 - 3, dadurch gekennzeichnet, daß die feststehenden Mittelstücke der Tragrahmenschenkel jeweils beidseitig mehrere quer zur Schneidrichtung stehende bolzen aufweisen, die in die an den Schneidleisten entsprechend befindlichen führungsnuten eingreifen.

5. Silagegutschneidegerät nach Anspruch 1 - 4, dadurch gekennzeichnet, daß die an den Mittelstücken installierten bolzen an ihrem Ende einen die jeweilige Führungsnut überragenden Kopf zur genauen seitlichen Führung der Schneidleisten aufweisen.

6. Silagegutschneidegerät nach Ansprüchen 1 - 5, dadurch gekennzeichnet, daß an allen drei Tragrahmenschenkeln die jeweiligen hinteren Schneidleisten eine größere Höhe als die vorderen Schneidleisten aufweisen, wodurch ermöglicht wird, daß in den Endbereichen die Endarme der Schneidleisten jeweils am Ende des Mittelstücks so zur Mitte hin winkelförmig abgebogen werden können, daß sich die Endarme einander vertikal in einer Ebene überlagern und jeweils der Endarm der hinteren Schneidleiste über den Endarm der vorderen Schneidleiste greift.

7. Silagegutschneidegerät nach einem der vorhergehenden Ansprüche, dadurch gekennzeichnet, daß die zu den Antriebsorganen hinweisenden Endarme der Seitenschneideleisten jeweils mittels eines Gelenks mit einem oberen bzw. unteren Arm der um ein feststehendes Gelenk beweglichen Antriebshebel verbunden sind.

8. Silagegutschneidegerät nach einem der vorhergehenden Ansprüche, dadurch gekennzeichnet, daß die zum vorderen Tragrahmen weisenden Endarme der Seitenschneideleisten übereinandergreifend in die Eckverbindungselemente eingreifen.

9. Silagegutschneidegerät nach einem der vorhergehenden Ansprüche,
dadurch gekennzeichnet, daß die Eckverbindungselemente derart ausgestaltet sind, daß sie in einem rechten Winkel umfassenden, bogenförmig ausgestalteten Führungsgehäuse in zwei übereinandergelagerten Ebenen die Kraftübertragungsmittel führen, die die jeweils in der oberen bzw. unteren Ebene über die ebenfalls übereinanderliegenden Endarme der Schneidleisten eingeleitete Schubkraft kraftschlüssig auf die frontseitig mit den Eckverbindungselementen verbundenen ebenfalls übereinandergelagerten Endarme der Frontschneideleisten übertragen.

10. Silagegutschneidegerät nach Anspruch 9,
dadurch gekennzeichnet, daß die zur Kraftübertragung in den Eckverbindungselementen verwendeten Übertragungsmittel aus in dem Führungsgehäuse aufrecht stehenden, mittels einseitig eingefräster bogenförmiger Nuten ineinandergreifende Metallzylinderrollen bestehen können, die kraftschlüssig die Endarme der Seitenschneideleisten mit den Endarmen der Frontschneideleisten verbinden.

11. Silagegutschneidegerät nach Anspruch 10,
dadurch gekennzeichnet, daß die Kraftübertragung innerhalb der Eckverbindungselemente auch mittels ketten- oder stahlbandförmig ausgestalteten Kraftübertragungsmitteln durchgeführt werden kann.

12. Silagegutschneidegerät nach Anspruch 11,
dadurch gekennzeichnet, daß die Führungsgehäuse der Eckverbindungselemente auch als Hydraulik-Druckkörper ausgestaltet werden können, wobei die Übertragung der Antriebskraft über als Druckkolben ausgestaltete Endarme der Messerleisten über in den Führungsgehäusen befindliche Hydraulikflüssigkeit erfolgen kann.

13. Silagegutschneidegerät nach einem der vorhergehenden Ansprüche,
dadurch gekennzeichnet, daß die Tragrahmen des Silagegutschneiders als an nach außen hin abgekapseltes, geschlossenes Gehäuse zur Aufnahme der beweglichen Teile vorgesehen ist, aus dem unterseitig lediglich die Messerleistenschneiden herausragen.

Fig.1

EP 0 337 089 A1

Fig.2

Fig.3

Fig.4

# Fig.5

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X,P | DE-A-3636775 (STRAUTMANN)<br>* Spalte 2, Zeile 43 - Spalte 3, Zeile 27; Figuren 1-7 *<br>--- | 1, 2, 3, 4, 5, 7, 13 | A01F25/20 |
| X | EP-A-255024 (VAN LENGERICH)<br>* Spalte 5, Zeile 34 - Spalte 8, Zeile 39; Figuren 1-6 *<br>--- | 1, 3, 4, 5, 7, 13 | |
| X | EP-A-102437 (TRIOLIET -MULLOS)<br>* Seite 9, Zeile 7 - Seite 11, Zeile 30; Figuren 5-, 10 *<br>--- | 1, 3, 4, 5, 9, 11 | |
| A | DE-A-3312916 (STEFFENS)<br>* Seite 5, Zeile 9 - Seite 7; Figuren 1-8 *<br>----- | 1, 3, 4, 5, 7 | |

RECHERCHIERTE SACHGEBIETE (Int. Cl.4 )

A01F

Der vorliegende Recherchenbericht wurde für alle Patentansprüche erstellt

| Recherchenort | Abschlußdatum der Recherche | Prüfer |
|---|---|---|
| DEN HAAG | 26 JUNI 1989 | VERMANDER R.H. |